# EUROPÄISCHE PATENTANMELDUNG

(11) **EP 4 378 756 A1**
(43) Veröffentlichungstag der Anmeldung: **05.06.2024**
(21) Anmeldenummer: 23210650.0
(22) Anmeldetag: 17.11.2023
(51) Int. Cl.: B60P 3/025, B60P 3/34, B62D 63/06, H04N 5/272, H04N 5/28, H04N 5/222, G03B 15/06

(54) **MOBILES BILDAUFNAHMESTUDIO UND VERFAHREN ZUR BILDAUFNAHME**

(30) Priorität: 01.12.2022 DE 102022131909
(71) Anmelder: Gero, Steffen, 12277 Berlin (DE)
(72) Erfinder: Gero, Steffen, 12277 Berlin (DE)
(74) Vertreter: Gulde & Partner

(57) **Zusammenfassung**

Die Erfindung beschreibt ein mobiles Bildaufnahmestudio zur ortsunabhängigen Herstellung von Bildaufnahmen unter Studiobedingungen sowie ein Verfahren zur Bildaufnahme in einem mobilen Bildaufnahmestudio. Das mobile Bildaufnahmestudio weist einem Grundkörper (1) auf, in welchem im Transportmodus ein Aus- und Einfahrmechanismus (2) für ein Dach (4) und Türflügel (3a, 3b) angeordnet sind, wobei im Betriebsmodus das Dach (4) entfaltet und die Türflügel (3a, 3b) ausgeklappt sind und zusammen mit dem Innenraum des Grundkörpers (1), Seitenwänden (9a, 9b) und einer Rückwand (13) einen Studioraum (7) bilden.

Das erfindungsgemäße Verfahren zur ortsunabhängigen Herstellung von Bildaufnahmen unter Studiobedingungen in dem mobilen Bildaufnahmestudio basiert darauf, dass die Kamera ausschließlich auf die Monitorwand ausgerichtet wird und durch einen festgelegten Winkel zu dem Hintergrundmonitor gebunden ist, wobei wenn sich die Perspektive der Kamera ändern soll, nicht wie üblich die Position und Richtung der Kamera geändert wird, sondern der Hintergrund auf dem Monitor und die Positionen der Objekte, die sich vor der Kamera befinden und aufgenommen werden sollen, entsprechend neu geordnet werden.

## Beschreibung

Die Erfindung betrifft ein mobiles Bildaufnahmestudio zur ortsunabhängigen Herstellung von Bildaufnahmen unter Studiobedingungen sowie ein Verfahren zur Bildaufnahme in einem mobilen Bildaufnahmestudio.

Produktionen, deren Ziel es ist, Bildmaterial für Film, Fernsehen und social Media zu produzieren, sind vor allem ein organisatorischer Vorgang. Dabei sind Wetter und Lichtverhältnisse die mit am schwersten zu kalkulierenden Einflussfaktoren. Ziel der Erfindung ist es, die Produktion von Bildaufnahmen, die unter freiem Himmel stattfinden sollen, von Licht.- und Wetterverhältnissen unabhängig zu machen.

Aus der DE 2032594 ist ein Verfahren und eine stationäre Anordnung zur Film- und Fernsehaufnahme eines Realbildes in Kombination mit einem aufprojizierten Projektionsbild bekannt.

Die EP 3 269 591 B1 beschreibt ein mobiles Studio zur Befestigung auf einem Fahrzeug, mit einem unteren Gerüst, das durch eine Stahlrahmenstruktur aufgebaut ist, und einem oberen Gerüst, das durch eine Aluminiumrahmenstruktur aufgebaut ist, und einer Halterung zum Verbinden des unteren Gerüsts mit dem Fahrzeug.

Mit der US 2011/0242322 A1 wurde ein mobiles Studio zur Produktion von Video- und Audioinhalten, wobei das mobile Studio Folgendes umfasst: ein Fahrzeug, das eine auf einem Fahrgestell montierte Karosserie umfasst, wobei die Karosserie ein Studiokammergehäuse aufweist, das durch einen Boden, eine Decke, beabstandete gegenüberliegende äußere Seitenwände und beabstandete äußere Vorder- und Rückwände gebildet wird, wobei der Boden der Studiokammer einen Bühnenbereich umfasst.

Der Erfindung liegt die Aufgabe zugrunde, ein mobiles Bildaufnahmestudio zur ortsunabhängigen Herstellung von Bildaufnahmen unter Studiobedingungen zu schaffen, welches einfach und preiswert herstellbar und gut transportfähig sowie schnell auf- und abbaubar ist und einen großen Studioraum bei minimalem Transportvolumen realisiert.

Es ist weiterhin Aufgabe der Erfindung, ein Verfahren zur ortsunabhängigen Herstellung von Bildaufnahmen unter Studiobedingungen in einem mobilen Bildaufnahmestudio zu schaffen, welches eine hohe Flexibilität bei der Herstellung der Bildaufnahmen ermöglicht.

Das mobile Bildaufnahmestudio bringt ein Studio und damit kontrollierbare Arbeitsbedingungen zu einem Drehteam, das Drehteam muss nicht zu einem Studio. Damit entfällt der Aufwand, ein ganzes Drehteam und sein Equipment bewegen zu müssen. Um diesen Vorteil nutzen zu können, muss nur die Erfindung, die beispielsweise in einem Seecontainer eingebaut ist, an den Ort gebracht werden, an dem sich das Drehteam bereits sowieso befindet. Bezahlte Zeit, die für jedes einzelne Teammitglied anfällt, kann zum Produzieren statt Transportieren verwendet werden. Des Weiteren ist eine Licht -und Wetterunabhängigkeit, die nur durch Sturm eingeschränkt ist, eine Option mehr, um ein Produktionspensum absolvieren zu können.

Auch die Möglichkeit, Fahraufnahmen simulieren zu können, erspart es, Straßen oder anderes öffentliches Gebiet absperren lassen zu müssen.

Dies erfindungsgemäßen Aufgaben werden gelöst durch die Merkmale in den Ansprüchen 1 und 9.

Zweckmäßige Ausgestaltungen der Erfindung sind in den Unteransprüchen enthalten.

Ein besonderer Vorteil der Erfindung resultiert daraus, dass das mobile Bildaufnahmestudio zur ortsunabhängigen Herstellung von Bildaufnahmen unter Studiobedingungen im Transportmodus ein wesentlich geringeres Volumen aufweist als im Betriebsmodus, indem in einem Grundkörper, in welchem im Transportmodus ein Aus- und Einfahrmechanismus für ein Dach und Türflügel angeordnet sind. Im Betriebsmodus ist das Dach entfaltet und die Türflügel sind ausgeklappt und bilden zusammen mit dem Innenraum des Grundkörpers, den Seitenwänden und einer Rückwand einen Studioraum.

Die Volumenvergrößerung wird anlagentechnisch dadurch realisiert, dass der Aus- und Einfahrmechanismus im Grundkörper fest verankert ist und Perforationsräder und Perforationsbänder umfasst und an den Türflügeln Lastschenkel angeordnet sind, wobei die Lastschenkel mit als Querrohre ausgebildeten Querstreben verbunden sind.

In dem Grundkörper ist weiterhin mindestens ein Monitor und in dem Studioraum mindestens eine Kamera angeordnet.

Das erfindungsgemäße mobile Bildaufnahmestudio kann sich in kurzer Zeit aus einem als containerförmigen Quader ausgebildeten Grundkörper zu einem Studioraum mit mehrfachem Raumvolumen im Vergleich zum Transportvolumen entfalten. Die Maße des entstehenden Studioraumes entsprechen vorzugsweise etwa der fünffachen Größe der Grundfläche eines Seecontainers. Eine der Stirnseiten des entstehenden quaderförmigen Raumes von ca. 55qm wird von einem Monitor ausgefüllt. Auf dem Monitor kann jedweder nötige Hintergrund einer visuellen Situation eingespielt werden, eine virtuelle Kulisse. Das bedeutet, dass nicht mehr nur die Kamera von einem Punkt im dreidimensionalen Raum aus ein Abbild vom Raum zweidimensional herstellen kann, sondern ein Teil des dreidimensionalen Raums in Gestalt des Monitors in zwei Dimensionen bereits existiert.

Ein vorproduzierter, kontrollierbarer Teil des Raumes wird vor eine Kamera gestellt. Ein großer Monitor ist die Hintergrundkulisse eines realen, kontrollierbaren Raumes. Der nutzbare, neu entstandene dreidimensionale Raum zwischen Kamera und Monitorwand ist der Raum, hier Studioraum benannt, der noch übrigbleibt, der aber für viele Situationen einer Bildaufnahmeproduktion ausreichend sein kann, um beispielsweise ein kalkuliertes Tagespensum zu erreichen, nur improvisieren zu können oder eine live Schaltung zu produzieren.

Sollte sich etwa eine Wetteränderung an einem Set andeuten, müssen lediglich bei noch gutem Wetter die benötigten Hintergründe aufgenommen werden, um sie dann später auf dem Monitor abzuspielen und als Hintergrund, als virtuelle Kulisse nutzen zu können. Es können nun Bildaufnahmen unter kontrollierten Bedingungen realisiert werden. Für das in dem mobilen Bildaufnahmestudio entstehende Bild spielt es dabei keine Rolle mehr, ob außerhalb des Studioraumes unpassendes Wetter herrscht oder es vielleicht dunkel geworden ist. Die Palette von möglichen realitätsnahen Bildaufnahmen wird durch die Ausmaße der Zweidimensionalität des Monitors einerseits und der dreidimensionalen Größe des Studioraumes davor andererseits, definiert. Die hierbei gültigen Gesetze können mit dem Strahlensatz berechnet werden.

Der Strahlensatz ist ein geometrisches Konzept der mathematischen Ähnlichkeiten, welches bei der Produktion einer Bildaufnahme unmittelbar in Erscheinung tritt. Die Lichtstrahlen werden im Falle einer Bildaufnahme nicht von einem Punkt ausgestrahlt, sondern umgekehrt durch das Kameraobjektiv in einem Brennpunkt gebündelt. Die geometrischen Gesetze und den sich daraus ergebenden Verhältnismäßigkeiten von Proportionen sind aber genauso gültig, wie beispielsweise bei dem Lichtpunkt einer Kerze, der von ihrer Flamme produziert wird. Ein Bildobjekt A, das sich näher am Brennpunkt des Kameraobjektivs befindet als ein anders Bildobjekt B gleicher Größe, erscheint größer im Bild der Kamera als Bildobjekt B. So wie auch der Schatten eines Objekts im Licht einer Kerze mit dem Quadrat seiner Entfernung kleiner wird je weiter weg es sich befindet und größer wird desto näher sich das Objekt am Lichtpunkt der Kerze aufhält. Dabei ist der Flächeninhalt des Objektschattens proportional zur Entfernung zur Kerze. Diese Tatsache macht sich die Erfindung zu nutze. Mit einem Flächeninhalt von ca. 12qm des Monitors und einer größtmöglichen Entfernung des Brennpunktes eines Kameraobjektivs von ca. 11m zum Monitor, ermöglicht die Anlage es einer Produktion von Bildaufnahmen zwar nicht, die ganze Welt in 360 Grad anzubieten, dafür aber definierte Bedingungen und damit kontrollierte Aufnahmebedingungen nutzen zu können.

Um, wenn gewünscht, realistisch wirkende Bilder zusammengesetzt aus Aufnahmen verschiedener Ebenen erzielen zu können, müssen von je her die einzelnen Vorlagen der Bildebenen unter ähnlichen Bedingungen hergestellt worden sein, damit ihre Addition, die Kombination zu einem Erscheinungsbild funktionieren kann. Es muss nicht nur das Licht aufeinander abgestimmt sein, vor allem muss jede Ebene mit einer ähnlichen Brennweite aufgenommen worden sein, um dann eine realistische Kombination zu ermöglichen. Es sind die Raummaße der Anlage, die auch ihre Grenzen sind. Doch dieser vermeintliche Nachteil, einmal akzeptiert, bietet einige Vorteile, die vor allem in der Kontrollierbarkeit des Sets liegen.

Einfach zusammen gefasst gilt, je näher die Kamera an den Monitor rückt und so auch eine kleine Weitwinkellinse nutzen kann (ohne die Monitorfläche optisch zu verlassen), desto kleiner wird der kontrollierbare Raum, der Studioraum, und umgekehrt. Die Kamera nutzt dabei nicht, wie im herkömmlichen Studio jede Richtung oder Höhe, sondern bleibt ausschließlich auf die Monitorwand ausgerichtet. Personen, Requisiten, Autos etc., also die Bildobjekte, werden danach so positioniert, wie es der Kameraausschnitt erfordert.

Soll eine Einstellung produziert werden, ordnet sich der gesamte Bildinhalt der Perspektive der Kamera, gerichtet auf den Monitor, unter. Das Prinzip beruht auf dem konsequenten Folgen des Strahlensatzes. Die Berechnung hat dabei zwei Konstanten. Erstens die definierte Größe des Monitors, und zweitens die definierte größtmögliche Entfernung innerhalb des entstehenden Studioraumes von mindestens 11m.

Die Kamera kann jede Position des Studioraumes einnehmen, solange sie auf den Monitor gerichtet bleibt.

Das, was wie eine Einschränkung klingt, kann in vielen Momenten der Produktion von Bildaufnahmen ein Vorteil sein. Die volle Kontrolle über das Bild. Das Studio. Das Prinzip klingt ungewohnt, ist aber im Ergebnis der gleiche Vorgang, der stattfinden würde, wäre die Kamera flexibel und nicht durch einen festgelegten Winkel zu dem Monitor gebunden.

Bildschirme jeder Art, jedes Handy, sind zweidimensionale Flächen. Dem zufolge ist jeder Bildschirm immer nur die Summe von Vordergrund und Hintergrund, also gemäß der Erfindung von Studioraum und Monitor.

Die Abbildung eines Menschen auf einer Kameraebene mithin dem Resultat auf einem Bildschirm, wird in verschiedene Größen unterteilt. Die nächste Einstellungsgröße, die Großaufnahme, zeigt im Wesentlichen nur das Gesicht des Menschen oder Bildobjekts. Die weiteste Einstellungsgröße ist eine Totale, die mindestens die gesamte Figur abbildet. Zwischen diesen Extrema gibt es jedoch weitere Abstufungen, die die Abbildungsgröße bezeichnen. Das ist zum Beispiel Halbtotal oder auch Halbnah. Was alle Bezeichnungen eint, ist ihre Abhängigkeit von der existierenden Proportionalität, die sich im Strahlensatz widerspiegelt.

Die Erfindung macht es sich zu Nutze, dass ein großer Teil benötigter Bildaufnahmen in Einstellungsgrößen näher als Total produziert wird. Daraus folgt, dass je näher der Ausschnitt der Kamera auf ihren Vordergrundbildinhalt ist, desto weniger wird (laut Strahlensatz) auch die Abbildung des Hintergrundes notwendig. Diese Tatsache kann zugunsten von Mobilität genutzt werden. Die Erfindung kann kein stationäres Studio ersetzten, bietet dennoch für viele Situationen die notwendigen Bedingungen, eine Bildaufnahme kontrolliert produzieren zu können. Ein Vordergrundbildinhalt muss in einem stationären Studio wie in einem mobilen Studio gestaltet werden. Der Unterschied besteht in dem Anteil, der durch den Hintergrund zur Vordergrundebene addiert wird. Die Produktion eines Bildschirminhalts, egal ob auf einem Handy oder einer Kinoleinwand, ist die Addition von verschiedenen Ebenen, die sich vor einer Kamera befinden. Die Erfindung ist die Reduktion auf das Notwendigste, eine kontrollierte Bildaufnahme herstellen zu können: Die Addition mindestens einer Vordergrundebene zu einer Hintergrundebene.

Das erfindungsgemäße mobile Bildaufnahmestudio hat zwei Modi. Den Transportmodus und den Betriebsmodus. Im Transportmodus hat die Erfindung die äußere Form eines Standartcontainers von 6058mm x 2438mm x 2896mm bzw. 20fuß x 8fuß x 9,5 fuß. Die Ecken sind mit standardisierten Containersockeln bestückt. So lässt sich eine Transportlogistik nutzen, die weltweit funktioniert.

Im Betriebsmodus ist der Studioraume voll entfaltet und hat etwa die fünffache Größe der Grundfläche des Containers
Das erfindungsgemäße mobile Bildaufnahmestudio ist in verschiedene Sektionen unterteilt, denen im jeweiligen Modus unterschiedliche Funktionen zukommen.

Die Erfindung soll nachstehend an von zumindest teilweise in den Figuren dargestellten Ausführungsbeispielen näher beschrieben werden.

Es zeigen:
- Fig.1: eine schematische Gesamtansicht des erfindungsgemäßen mobilen Bildaufnahmestudios in Explosionsdarstellung

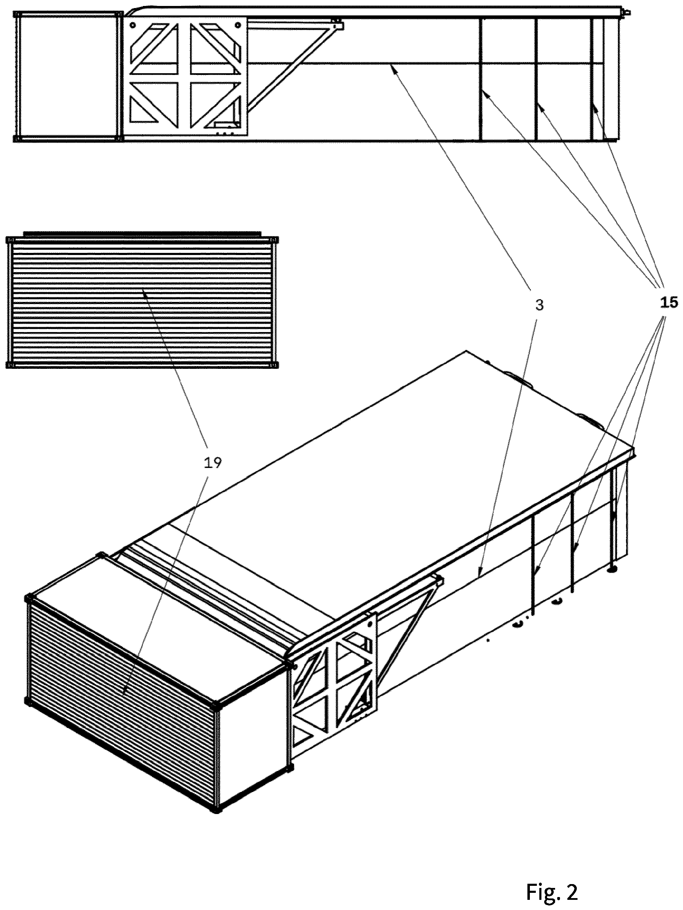

- Fig. 2: eine schematische Gesamtansicht des erfindungsgemäßen mobilen Bildaufnahmestudios in drei Ansichten

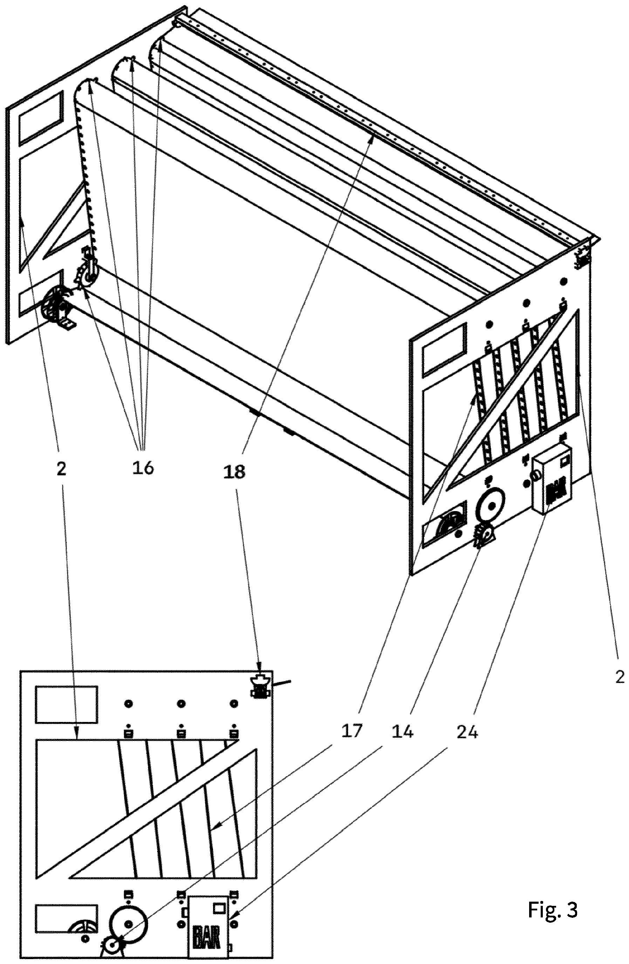

- Fig. 3: eine schematische Ansicht des Aus- und Einfahrmechanismus
- Fig. 4: eine schematische Ansicht des Grundkörpers mit eingeklappter Raumsektion ohne Mechanismus der Dachsektion
- Fig. 5: eine schematische Ansicht des Grundkörpers mit ausgeklappter Raumsektion

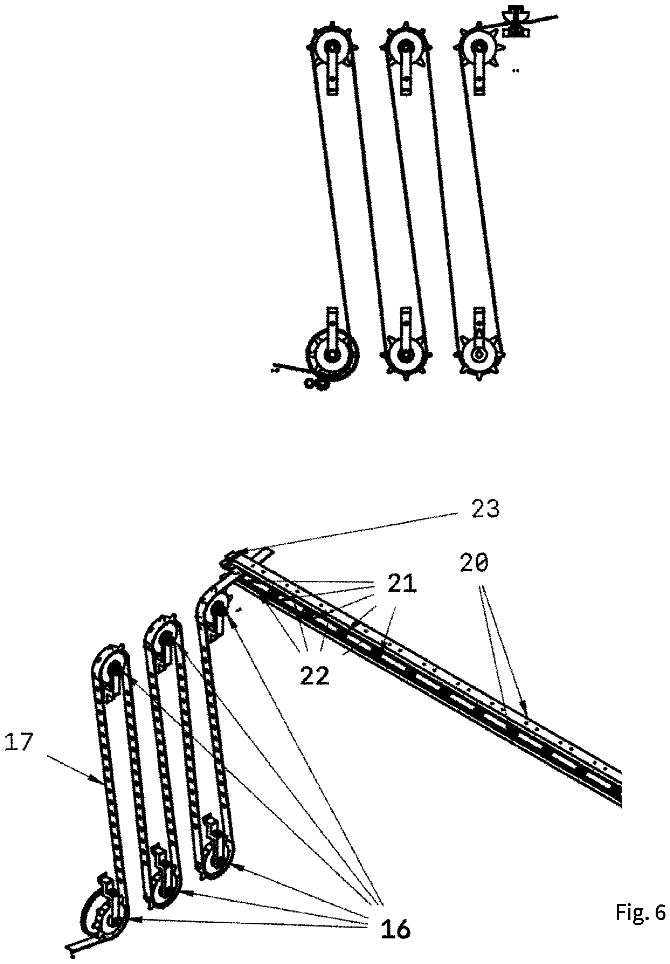

- Fig. 6: Darstellung der Schlitzschiene

Das erfindungsgemäße mobile Bildaufnahmestudio für sich soll hier in vier Sektionen (Sektion I bis IV) unterteilt sein.

Die Einteilung in Sektionen macht die verschiedenen Baugruppen in ihren übergeordneten Funktionen differenzierter und dann so ihre Darstellung einfacher nachvollziehbar. Denn die Aufgabe ist der Transport von größtmöglichem, potenziellen Volumen auf kleinstmöglichem Raum plus Lüftung.

Sektion I ist als Grundkörper 1 die äußere Form und das Chassis des mobilen Bildaufnahmestudios.

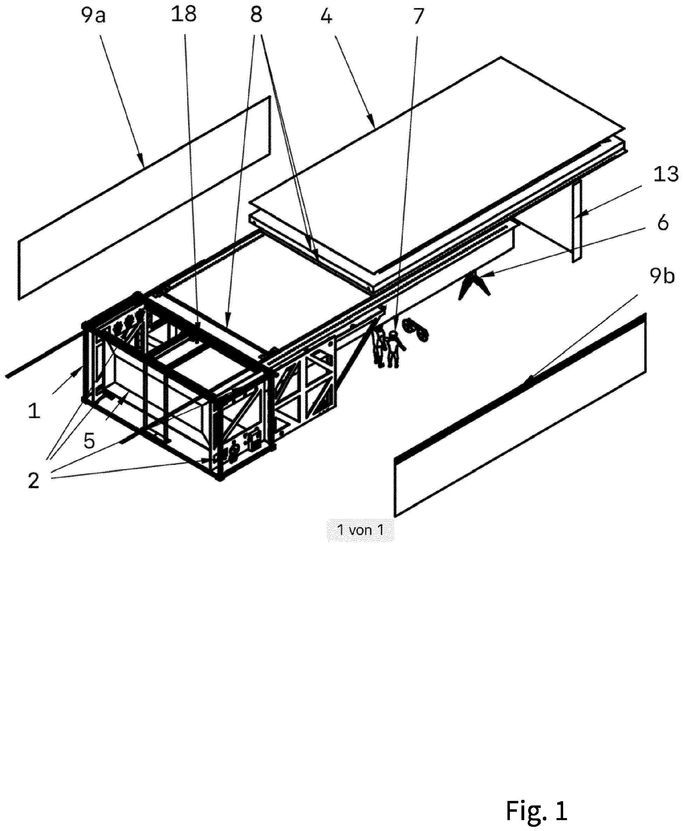

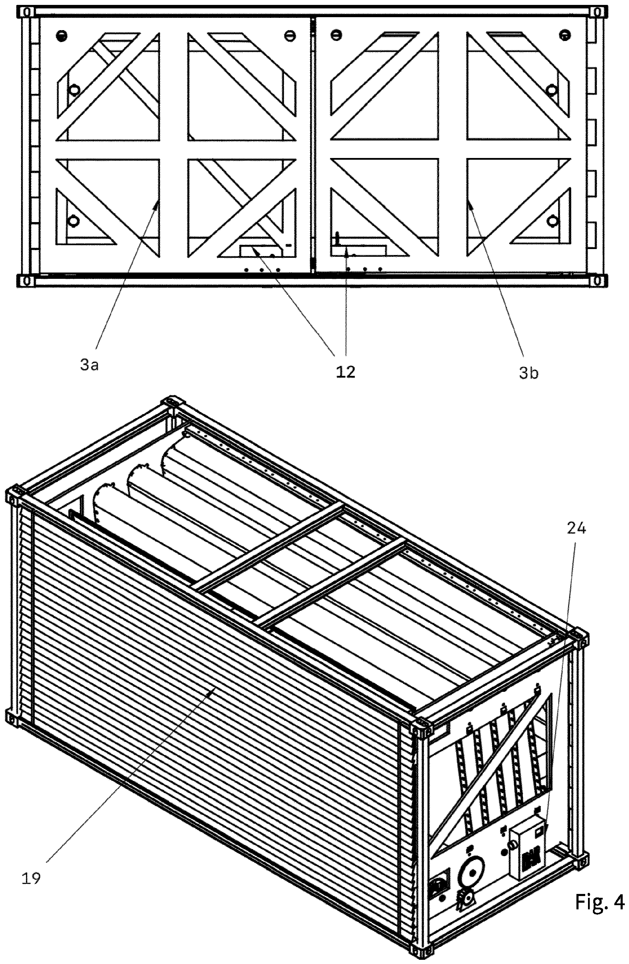

Wie in Fig. 1 und 4 dargestellt, ist der Grundkörper 1 ein containerförmiges Transportgehäuse und die statische Basis des mobilen Bildaufnahmestudios während des Transport -oder Betriebsmodus. Die anderen Sektionen befinden sich während des Transportmodus im Innern des Grundkörpers 1 verstaut. Darüber hinaus, um den Transport des mobilen Bildaufnahmestudios zu gewährleisten, ist es eine weitere Aufgabe des Grundkörpers 1, die notwendige Statik des sich entfaltenden Bildaufnahmestudios zu gewährleisten. Im Innern, an der Längsseite des Grundkörpers 1 ist der größtmögliche Abstand zum entstehenden Raum.

In der Größe der großen Seitenwand des Grundkörpers 1 befindet sich hier der Monitor 5, beweglich und drehbar verankert.

Damit das mobile Bildaufnahmestudio auch während des Transports belüftet werden kann, ist die Seitenwand hinter dem Monitor 5 mit beweglichen Lamellen 19, wie in Fig. 4 zu ersehen, bestückt, damit nach Regen eine Luftzirkulation zum Trocknen der Anlage im Innenraum gewährleistet ist.

Sektion II ist der Aus- und Einfahrmechanismus 2, der die Dachkonstruktion 8 nach dem Gebrauch wieder aufwickelt und gegebenenfalls mit einem Gebläse trocknet. Der Aus- und Einfahrmechanismus 2 bleibt innerhalb das Grundkörpers 1 fest verankert. Das Aus- und Einfahren erfolgt im vorliegenden Ausführungsbeispiel über zwölf Perforationsräder 16, die jeweils mit acht abgerundeten Dornen auf einem Außenring in eine Perforation auf zwei flexiblen Perforationsbändern 17 greifen. Damit werden, von einem Elektromotor 14 angetrieben, die flexiblen Perforationsbänder 17 bewegt, die ab der Hälfte ihrer Länge fest mit der ebenfalls flexiblen Dachkonstruktion 8 jeweils rechts und links verbunden sind. Der Transport mit Motorkraft wird nur beim Verstauen der Dachkonstruktion 8 zurück in den Transportmodus nötig. Das kann geschehen, weil bei der Gegenbewegung, das Entfalten der Dachkonstruktion 8, Lufttanks die erforderliche Bewegung bewerkstelligen. Somit wird die motorgestützte Transportbewegung nur in eine Richtung gebraucht.

Deshalb sind die Perforationsbänder 17 mit ihrer Perforation doppelt so lang, wie die Länge der Dachkonstruktion 8. So ist der Monitor 5 im Betriebsmodus überhaupt sichtbar und im Transportmodus die Dachkonstruktion 8 trockenbar. Im Transportmodus werden die Perforationsbänder 17 auf federgetriebenen Wickelspulen zwischengelagert. Die Perforationsräder 16 sind so angeordnet, dass zwischen den Flächen der Oberseite bzw. Unterseite der aufgewickelten Dachkonstruktion 8 Platz für die Luftzirkulation beim Trocknen bleibt.

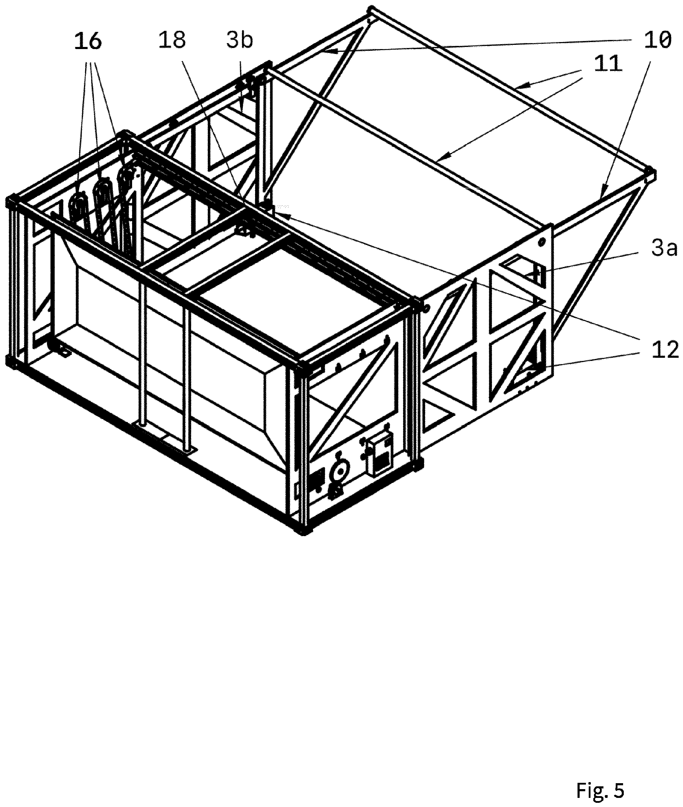

Sektion III, die Raumsektion 3 ist im Transportmodus eine Seitenwand des Grundkörpers 1 und besteht aus zwei Türflügeln 3a, 3b, wie in Fig. 4 dargestellt. Im Betriebsmodus sind sie mindestens 90 Grad geöffnet, wie in Fig. 5 dargestellt. Die Türflügel 3a, 3b beherbergen Lastschenkel 10, die aufgeklappt den Weg der Kraftaufnahme des Daches 4 senkrecht verlängern. Das entstehende Gestell ist so einerseits für die Stabilität und Statik der betriebsbereiten Anlage zuständig, als auch die universelle Aufnahmekonstruktion jeglichen Filmequipments. Die unteren Außenecken der geöffneten Türflügel 3a, 3b sind mit Stützmodulen 12 versehen, die wie Wagenheber das Gestell vom Untergrund her fixieren. So kann die Last der Dachkonstruktion 8 und die Last des angeflanschten Equipments auf den Boden abgeleitet werden. Im vorliegenden Ausführungsbeispiel als Querrohre ausgebildete Querstreben 11, an der Oberseite der Lastschenkel 10 verbunden, fangen die Horizontalkräfte auf. Das sich aufklappende Gestell muss das Lichtequipment tragen, das notwendig wird, um die Lichtstimmung im Studioraum 7 zu produzieren, die entweder von der virtuellen Kulisse, dem Hintergrund auf dem Monitor 5, vorgegeben oder anderweitig gestaltet gewünscht wird.

Sektion IV, ist die Dachkonstruktion 8, sowie die oberen Ansätze der verbleibenden beiden Seitenwände 9a und 9b und der Rückwand 13 des Studios. Die Oberseite besteht aus einem wasserdichten flexiblen Material, das mit den Lufttanks verklebt ist. Die untere Seite ist schwarz und von stumpfer Oberfläche. Die Seitenwand- und die Rückwandansätze sind im Transportmodus mit Klettverschlüssen an die Dachkonstruktion 8 geheftet. Im Betriebsmodus wird der bis zum Boden fehlende Teil der Studiowände 9a und 9b und der Rückwand 13 durch mitgeführte schwarzreflektierende Stoffe ergänzt und auch mit Klettverschlüssen angeheftet. Wird die Anlage in den Betriebsmodus versetzt geschieht das durch einen Luftkompressor 24, der die flexiblen Lufttanks im Innern der Dachkonstruktion 8 mit Druckluft füllt. Diese Lufttanks sind fest mit der Oberseite sowie der Unterseite verklebt.

So schiebt die im Verhältnis zu den Oberflächen flexiblere Struktur der Lufttanks den gesamten Dachkörper durch eine Schlitzschiene auf die Außenseite des Grundkörpers 1. Diese Schlitzschiene ist mit Rollen bestückt, um die Reibung während des Vorgangs zu reduzieren.

Die Schlitzschiene 18 besteht aus zwei U-Trägern 20, die gegenüberliegend Schlittenchassis 21 stabilisieren. In den Schlittenchassis 21 sind abgerundete Rollzylinder 22 gelagert, die die Reibung 90 Grad zum Transport der Dachkonstruktion 8 montiert, reduzieren. Da Umweltumstände unterschiedliche materielle Zustände der zu transportierenden Dachkonstruktion 8 zur Folge haben, ist die Schlitzschiene 18 oben und unten mit einem als Arretierschraube ausgebildeten Arrettierelement versehen, welches bei Volumenveränderungen der Dachkonstruktion eine Justierung ermöglicht.

Damit das Dach 4 auch auf der Rückseite des Studios die gleiche Höhe hat, werden sechs der Perforationslöcher für Dachstützen 15 genutzt. Das ist möglich, weil, die im Bereich der Rückwand 13 wirkende Last des Daches 4 an dieser Stelle nur senkrecht wirkt.

Das Entfalten und Verstauen der Studioanlage kann sowohl im Handbetrieb, als auch mit elektrischer Energie geschehen. Im Falle des Entfaltens können die Lufttanks mit einer Handluftpumpe befüllt werden. Mit einer Handkurbel kann später der Elektromotor 14 überbrückt und so die Perforationsbänder 17 bewegt werden. Die Stromversorgung des Monitors 5 und seiner Steuereinheit findet über einen Akkumulator statt, der von einem Sonnenkollektor gespeist wird. Darüber hinaus verfügt die Anlage über einen mobilen Generator und einen Elektroanschluss, der eine konventionelle, externe Stromversorgung ermöglicht. So kann die Anlage bei Bedarf autark ohne jede Stromversorgung, unter freiem Himmel betrieben werden. Im Betriebsmodus ist die Anlage entfaltet und der Studioraum 7 zwischen Monitor 5 und Kamera 4 kann für fiktionale oder nichtfiktionale Bildaufnahmen genutzt werden. Die nun von Einflussfaktoren, wie Lichtverhältnisse
oder Wetter unabhängige Fläche des Studioraums 7 hat eine Größe von 11m x 5m. Um wie erwähnt auch Perspektivwechsel der Kamera 4 umsetzen zu können, muss sich der Vordergrund, die Objekte im Studioraum 7 vor der Monitorfläche, physisch an die Kamera 4 anpassen. Das bedeutet, dass auch sehr große, schwere Requisiten, wie z.B. Autos bewegt werden müssen. Deshalb kann im Studioraum eine mitgelieferte Bühnenplattform benutzt werden. Die Plattform kann in verschiedenen Ausführungen für je unterschiedliche Anforderungen benutzt werden. Ein Laufband als Bühnenplattform kann eine relative Bewegung zur Monitorwand kompensieren und so beispielsweise menschliche Laufbewegungen in der Kamera 4 vortäuschen. Durch die räumliche Trennung von Vordergrund und Hintergrund - dem Studioraum 7 und dem Monitor 5 - ist es mit der Anlage auch möglich, eine präzise Interaktion zwischen Beidem möglich zu machen.

Da Unfälle von Fahrzeuge mit mobilen Kameraaufbauten im öffentlichen Straßenverkehr zu Verboten vielerorts geführt haben, ergibt sich ein weiteres Anwendungsgebiet der Erfindung: die Realisierung von Fahraufnahmen in Autos, auf Fahrrädern etc. Der Monitor 5 kann als Hintergrundkulisse für Fahraufnahmen fungieren, indem Fahrzeuge auf Bewegungsimitatoren im vorhandenen Studioraum auf die Bühnenplattform gestellt werden und vorproduzierte Hintergründe auf dem Monitor 5 abgespielt werden. Es müssen dafür nicht mehr ganze Straßenzüge gesperrt werden. Im Studioraum 7, dem Vordergrund befinden sich die Bildobjekte, die relativ zur Monitorwand unbeweglich sind. Die Illusion der Bewegung wird allein durch den sich bewegenden Hintergrund und die Bewegungsimitatoren auf der Bühnenplattform erzeugt.

An das sich aus Sektion III entfaltende Gestell kann sowohl jede Form von Beleuchtungsequipment, als auch weitere Monitore oder Leinwände für Reflexionen angeflanscht werden. Die Methode, die sich bewegende Umwelt auch in Reflexionen auf Bildobjekten, wie z.B. Autoscheiben der Umgebung, zu imitieren, ist bereits gängige Praxis bei regulären Studioaufbauten für Produktionen von Fahraufnahmen dieser Art in einem festen Studio.

Die Erfindung ist nicht beschränkt auf die hier dargestellten Ausführungsbeispiele. Vielmehr ist es möglich, durch Kombination und Variation der benannten Mittel und Merkmale weitere Realisierungsvarianten zu realisieren, ohne den Rahmen der Erfindung zu verlassen.

### Bezugszeichenliste

- 1: Grundkörper
- 2: Aus- und Einfahrmechanismus
- 3: Raumsektion
- 3a: Flügeltür
- 3b: Flügeltür
- 4: Dach
- 5: Monitor
- 6: Kamera
- 7: Studioraum
- 8: Dachkonstruktion
- 9a: Seitenwand
- 9b: Seitenwand
- 10: Lastschenkel
- 11: Querstreben
- 12: Stützmodule
- 13: Rückwand
- 14: Elektromotor
- 15: Dachstützen
- 16: Perforationsräder
- 17: Perforationsbänder
- 18: Schlitzschiene
- 19: Lamellen
- 20: U-Träger
- 21: Schlittenchassis
- 22: Rollzylinder
- 23: Arretierelement
- 24: Luftkompressor

## Patentansprüche

1. Mobiles Bildaufnahmestudio zur ortsunabhängigen Herstellung von Bildaufnahmen unter Studiobedingungen mit einem Grundkörper (1), in welchem im Transportmodus ein Aus- und Einfahrmechanismus (2) für ein Dach (4) und Türflügel (3a, 3b) angeordnet sind, wobei im Betriebsmodus das Dach (4) entfaltet und die Türflügel (3a, 3b) ausgeklappt sind und zusammen mit dem Innenraum des Grundkörpers (1), Seitenwänden (9a, 9b) und einer Rückwand (13) einen Studioraum (7) bilden.

2. Mobiles Bildaufnahmestudio nach Anspruch 1, **dadurch gekennzeichnet, dass** der Aus- und Einfahrmechanismus (2) im Grundkörper (1) fest verankert ist und Perforationsräder (16) und Perforationsbänder (17) umfasst.

3. Mobiles Bildaufnahmestudio nach Anspruch 1, **dadurch gekennzeichnet, dass** an den Türflügeln (3a, 3b) Lastschenkel (10) angeordnet sind.

4. Mobiles Bildaufnahmestudio nach Anspruch 3, **dadurch gekennzeichnet, dass** die Lastschenkel (10) mit als Querrohre ausgebildeten Querstreben (11) verbunden sind.

5. Mobiles Bildaufnahmestudio nach Anspruch 1, **dadurch gekennzeichnet, dass** in dem Grundkörper (1) mindestens ein Monitor (5) und in dem Studioraum (7) mindestens eine Kamera (6) angeordnet ist.

6. Mobiles Bildaufnahmestudio nach mindestens einem der voranstehenden Ansprüche , **dadurch gekennzeichnet, dass** die Seitenwand hinter dem Monitor (5) bewegliche Lamellen (19) zur Realisierung einer Luftzirkulation zum Trocknen der Anlage aufweist.

7. Mobiles Bildaufnahmestudio nach mindestens einem der voranstehenden Ansprüche , **dadurch gekennzeichnet, dass** das das Dach (4) eine Dachkonstruktion (8) umfasst, die mit Lufttanks verbunden ist.

8. Mobiles Bildaufnahmestudio nach Anspruch 1, **dadurch gekennzeichnet, dass** im Studioraum (7) eine Bühnenplattform angeordnet ist.

9. Verfahren zur ortsunabhängigen Herstellung von Bildaufnahmen unter Studiobedingungen in einem mobilen Bildaufnahmestudio, wobei die Kamera ausschließlich auf die Monitorwand ausgerichtet wird und durch einen festgelegten Winkel zu dem Hintergrundmonitor gebunden ist, wobei wenn sich die Perspektive der Kamera ändern soll, nicht wie üblich die Position und Richtung der Kamera geändert wird, sondern der Hintergrund auf dem Monitor und die Positionen der Objekte, die sich vor der Kamera befinden und aufgenommen werden sollen, werden entsprechend neu geordnet.

10. Verfahren nach Anspruch 6, **dadurch gekennzeichnet, dass** die Kamera jede Position des Studioraumes einnehmen kann, solange sie auf den Monitor gerichtet bleibt.
